# EUROPÄISCHE PATENTANMELDUNG

(11) **EP 1 219 905 A2**
(43) Veröffentlichungstag der Anmeldung: **03.07.2002**
(21) Anmeldenummer: 01130382.3
(22) Anmeldetag: 20.12.2001
(51) Int. Cl.: F24D 3/14

(54) **Fussbodenheizung**

(30) Priorität: 21.12.2000 DE 20021614 U
(71) Anmelder: U.S.H. Innovationen GmbH, 33758 Schloss Holte-Stukenbrock (DE)
(72) Erfinder: Schröder, Ulrich, 33758 Schloss Holte-Stukenbrock (DE); Henkenjohann, Walter, 33758 Schloss Holte-Stukenbrock (DE)
(74) Vertreter: TER MEER STEINMEISTER & PARTNER GbR

(57) **Zusammenfassung**

Fußbodenheizung mit zwei parallel verlaufenden, mäanderförmig auf einer Trägermatte (10) verlegten Heizungsrohren (12, 14), die im Gegenstrom von einem Heizmedium durchströmt werden, dadurch gekennzeichnet, daß die Trägermatte (10) eine Kupferdrahtmatte ist.

## Beschreibung

Die Erfindung betrifft eine Fußbodenheizung mit zwei parallel verlaufenden, mäanderförmig auf einer Trägermatte verlegten Heizungsrohren, die im Gegenstrom von einem Heizmedium durchströmt werden.

Aus EP-B-0 816 764 ist eine Fußbodenheizung dieser Art bekannt, die sich besonders für eine nachträgliche Verlegung eignet, da die durch flexible Kunststoffrohre gebildeten Heizungsrohre nur einen Durchmesser von 8 mm haben und sich mit entsprechend geringer Aufbauhöhe in einer verhältnismäßig dünnen Schicht einer Ausgleichsmasse, beispielsweise unter einem Fliesenfußboden verlegen lassen. Die Trägermatte mit den fest darauf angebrachten Heizungsrohren kann als eine Rolle angeliefert und dann auf dem Fußboden ausgerollt werden. Ein Nachteil besteht jedoch darin, daß aufgrund des relativ geringen Rohrquerschnitts nur eine geringe Durchflußmenge des Heizmediums möglich ist. Da auch die maximal zulässige Temperatur des Heizmediums bei Fußbodenheizungen begrenzt ist, ergibt sich insgesamt nur eine geringe Heizleistung. Ein weiterer Nachteil besteht darin, daß die Trägermatte, die durch ein grobmaschiges Gewebe aus Kunststoffasern gebildet wird, nach dem Ausrollen dazu neigt, in den Zwischenräumen zwischen den Heizungsschlangen Beulen zu werfen. Wenn die Matte in die Füllmasse eingebettet ist, wird daher häufig die Füllmasse, noch bevor sie abbinden kann, wieder hochgedrückt, so daß sich eine unebene oder bröckelige Oberfläche ergibt. Aus diesem Grund muß die Matte sorgfältig, an vielen über der Fläche verteilten Punkten, auf der Unterlage befestigt werden, was zu einem erhöhten Installationsaufwand führt.

Aufgabe der Erfindung ist es, eine Fußbodenheizung der eingangs genannten Art zu schaffen, die sich einfacher verlegen läßt und zugleich eine höhere Heizleistung aufweist.

Diese Aufgabe wird erfindungsgemäß dadurch gelöst, daß die Trägermatte eine Kupferdrahtmatte ist.

Aufgrund der hohen Wärmeleitfähigkeit der Kupferdrähte wird der Wärmeübergang der Fußbodenheizung um etwa 30% verbessert, so daß bei gleicher Durchflußmenge und gleicher Temperatur des Heizmediums eine entsprechend höhere Heizleistung erzielbar ist. Ein weiterer wesentlicher Vorteil besteht darin, daß die Kupferdrahtmatte zwar flexibel ist aber dennoch eine gewisse Steifheit und außerdem ein im Vergleich zu Kunststoffgewebe erhöhtes Flächengewicht aufweist, so daß die Matte nach dem Ausrollen glatt auf der Unterlage liegen bleibt, ohne Beulen zu werfen. Es genügt daher, die Kupferdrahtmatte nur an relativ wenigen Punkten auf der Unterlage zu befestigen. Aufgrund der relativ großen Steifheit der Matte werden auch die Heizungsrohre flach anliegend auf der Unterlage gehalten, so daß es nicht erforderlich ist, die Heizungsrohre unmittelbar mit Schellen oder dergleichen auf der Unterlage zu befestigen. Vielmehr können die Befestigungsorgane, beispielsweise Harpunennägel oder dergleichen, versetzt zu den Heizungsrohren angebracht werden, so daß die Heizungsrohre nur mittelbar durch die Trägermatte auf der Unterlage gehalten werden. Hierdurch wird eine zusätzliche Verringerung der Aufbauhöhe der Fußbodenheizung ermöglicht.

Vorteilhafte Ausgestaltungen der Erfindung ergeben sich aus den Unteransprüchen.

Der Wärmeübergang läßt sich dadurch weiter verbessern, daß als Heizungsrohre Kupferrohre mit geringem Querschnitt verwendet werden. Auch diese Kupferrohre weisen noch eine ausreichende Flexibilität auf und lassen sich, da sie fest in die Trägermatte eingebunden sind, mit Hilfe der Trägermatte glatt auf der Unterlage verlegen.

In einer besonders bevorzugten Ausführungsform sind die Heizungsrohre unmittelbar in die einlagige Kupferdrahtmatte eingewebt oder eingeflochten. Hierdurch ergibt sich eine besonders sichere und lagestabile Befestigung der Heizungsrohre auf der Trägermatte und aufgrund der innigen Berührung zwischen den Kupferdrähten der Matte und den Heizungsrohren ein besonders guter Wärmeübergang. Dieses Merkmal ist stellt auch unabhängig von den Merkmalen des Anspruchs 1 eine eigenständige Erfindung dar, beispielsweise in Verbindung mit einer Matte aus Kunststofffasern oder anderen Materialien.

Aus DE-C-196 50 892 ist eine Regelvorrichtung für eine Fußbodenheizung bekannt, die aus einer Kombination aus Rücklauftemperaturbegrenzer und Raumthermostatventil besteht. Diese Ventilkombination wird im Rücklauf der Fußbodenheizung angeordnet und ermöglicht es, die Fußbodenheizung aus einer mit höherer Vorlauftemperatur betriebenen Radiator-Heizungsanlage zu speisen und dabei mit Hilfe der Fußbodenheizung die Raumtemperatur zu regeln und, durch die Wirkung des Rücklauftemperaturbegrenzers, zugleich die Temperatur des Heizmediums in der Fußbodenheizung auf einen zulässigen Wert zu begrenzen. Vorzugsweise ist eine solche Ventilkombination in einem Unterputzkasten angeordnet, der in die Wand oder in den Boden eingelassen werden kann, und beide Heizungsrohre der erfindungsgemäßen Fußbodenheizung sind mit beiden Enden an diese Ventilkombination angeschlossen. Zu diesem Zweck enthält der Unterputzkasten zwei an den Vorlauf der Heizungsanlage angeschlossene Steckkupplungen, an die die Vorlauf-Enden der beiden Heizungsrohre angeschlossen werden, so wie zwei weitere Steckkupplungen, über die die Rücklauf-Enden der beiden Heizungsrohre mit der Kombination aus Rücklauftemperaturbegrenzer und Raumthermostatventil verbunden werden. Die Trägermatte weist somit eine einzige Anschlußstelle auf, an der die beiden Enden beider Heizungsrohre aus der Trägermatte herausgeführt sind, so daß sie an die Ventilarmatur angeschlossen werden können. Die Temperatur des Heizmediums, das im Gegenstrom durch die beiden Heizungsrohre fließt, läßt sich daher auf einfache Weise mit Hilfe einer einzigen Ventilkombination regeln. Da die beiden Heizungsrohre somit parallel geschaltet sind, ergibt sich ein niedriger Strömungswiderstand und somit eine hohe Durchflußmenge des Heizmediums. Aufgrund des Gegenstromprinzips wird dabei eine gleichmäßige Temperaturverteilung erreicht.

Im folgenden wird ein Ausführungsbeispiel anhand der Zeichnungen erläutert.

Es zeigen:
- Fig. 1: einen schematischen Grundriß der Fußbodenheizung; und
- Fig. 2: einen schematischen Schnitt durch eine Trägermatte der Fußbodenheizung mit eingewebten Heizungsrohren.

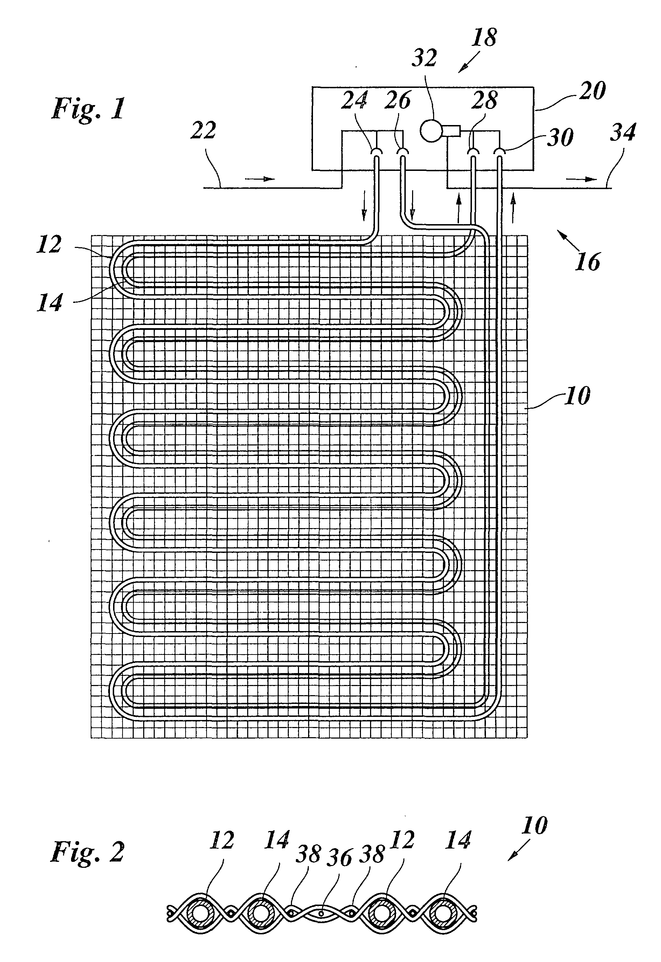

Die in Figur 1 gezeigte Fußbodenheizung weist eine Trägermatte 10 auf, die durch ein Geflecht oder Gewebe aus Kupferdrähten gebildet wird und in die zwei Heizungsrohre 12, 14 aus Kupfer eingewebt sind. Bei den Heizungsrohren handelt es sich beispielsweise um Rundrohre mit einem Außendurchmesser von 8 mm. Wahlweise kann der Querschnitt jedoch auch zu einem Oval abgeflacht sein, so daß die Bauhöhe der Fußbodenheizung weiter verringert wird.

Die Heizungsrohre 12, 14 verlaufen auf ihrer gesamten Länge in geringem Abstand parallel nebeneinander und sind mäanderförmig auf der Trägermatte 10 verlegt, so daß sie die Fläche der Trägermatte 10 im wesentlichen gleichmäßig ausfüllen. An einer einzigen Anschlußstelle 16 am Rand der Trägermatte 10 sind beide Enden beider Heizungsrohre 10, 12 aus der Trägermatte 10 herausgeführt und an eine Regelungsarmatur 18 angeschlossen, die in einem nur schematisch dargestellten Unterputzkasten 20 untergebracht ist.

Der Vorlauf 22 einer Radiator-Heizungsanlage tritt in den Unterputzkasten 20 ein und verzweigt sich dort auf zwei Steckkupplungen 24, 26, an die je ein Ende eines Heizungsrohres 12, 14 angeschlossen ist. Diese Enden bilden somit die Vorlauf-Enden der Heizungsrohre 12, 14. Die Rücklauf-Enden dieser Heizungsrohre sind im Unterputzkasten 20 über weitere Steckkupplungen 28, 30 mit einem Kombiventil 32 verbunden, das eine Kombination aus Rücklauftemperaturbegrenzer und Raumthermostatventil darstellt. Das Kombiventil 32 ist an den Rücklauf 34 der Heizungsanlage angeschlossen.

Das über den Vorlauf 22 zugeführte Heizmedium, das beispielsweise eine Temperatur von 60° C hat, verteilt sich über die beiden Steckkupplungen 24, 26 auf die Heizungsrohre 12, 14. Bei dem Heizungsrohr 12 tritt das Medium direkt in die mäanderförmigen Heizschlangen ein, während bei dem Heizungsrohr 14 das heiße Vorlauf-Medium zunächst durch einen geraden Ast des Heizungsrohres zum rückwärtigen Ende der Heizschlange fließt und dann die mäanderförmigen Schleifen vom entgegengesetzten Ende her durchströmt, so daß die Fließrichtungen in den beiden Heizungsrohren 12, 14 entgegengesetzt sind. Auf der Rücklaufseite werden die Ströme des Heizmediums am Kombiventil 32 wieder vereinigt. Ein Temperaturfühler dieses Kombiventils erfaßt die Rücklauftemperatur des Mediums. Das Kombiventil 32 ist so ausgelegt, daß es abregelt, sobald die Rücklauftemperatur einen Wert von beispielsweise 40° C übersteigt. Das Heizmedium in den Heizungsrohren 12, 14 kühlt sich somit ab, und es kann erst dann wieder heißes Vorlauf-Medium nachströmen, wenn die Temperatur am Rücklauf unter dem Grenzwert abgenommen hat. Auf diese Weise wird eine Überhitzung der Fußbodenheizung vermieden. Außerdem weist das Kombiventil 32 einen Raumthermostatkopf auf, der die Raumtemperatur erfaßt. Solange die Raumtemperatur unterhalb des eingestellten Sollwertes liegt, wird die Durchflußmenge allein durch den Rücklauftemperaturbegrenzer bestimmt. Steigt dagegen die Raumtemperatur über den eingestellten Sollwert an, so schließt das Kombiventil auch dann, wenn die Rücklauftemperatur des Mediums unter dem zulässigen Grenzwert liegt. Auf diese Weise ermöglicht das Kombiventil 32 eine Regelung der Raumtemperatur bei gleichzeitigem Schutz der Fußbodenheizung gegen Überhitzung.

Damit in der Ausgleichsmasse, in die die Fußbodenheizung eingebettet wird, keine Rohrkupplungen erforderlich sind, sollten die aus der Trägematte 10 austretenden Enden der Heizungsrohre 12, 14 so lang sein, daß der Unterputzkasten an beliebiger Stelle im Raum angeordnet werden kann. Vorzugsweise ist die Länge der außerhalb der Trägermatte liegenden Enden der Heizungsrohre etwa zwei Meter größer als die Länge der Trägermatte 10. Beim Verlegen werden die Heizungsrohre dann auf das erforderliche Maß gekürzt.

Figur 2 illustriert in einem vergrößerten Schnitt, wie die Heizungsrohre 12, 14 in die längsverlaufenden Kupferdrähte 36 und die querverlaufenden Kupferdrähte 38 der Trägermatte 10 eingewebt sind. Die Kupferdrähte 36, 38 können massive Drähte oder wahlweise auch Bündel oder Kordeln aus dünnen Kupferadern sein. Da die Trägermatte im wesentlichen symmetrisch zu ihrer Hauptebene ausgebildet ist, kann sie im Bedarfsfall auch gewendet, d. h., mit der Unterseite nach oben verlegt werden, um den Anschluß an den Unterputzkasten 20 zu erleichtem und die Leitungslänge zu minimieren.

## Patentansprüche

1. Fußbodenheizung mit zwei parallel verlaufenden, mäanderförmig auf einer Trägermatte (10) verlegten Heizungsrohren (12, 14), die im Gegenstrom von einem Heizmedium durchströmt werden, **dadurch gekennzeichnet, daß** die Trägermatte (10) eine Kupferdrahtmatte ist.

2. Fußbodenheizung nach Anspruch 1, **dadurch gekennzeichnet, daß** die Heizungsrohre (12, 14) flexible Kupferrohre sind.

3. Fußbodenheizung nach Anspruch 1 oder 2, **dadurch gekennzeichnet, daß** die Heizungsrohre (12, 14) in die Trägermatte (10) eingewebt sind.

4. Fußbodenheizung nach Anspruch 3, **dadurch gekennzeichnet, daß** die Trägermatte (10) als bezüglich ihrer Hauptebene symmetrische Wendematte ausgebildet ist.

5. Fußbodenheizung nach einem der vorstehenden Ansprüche, **dadurch gekennzeichnet, daß** die Trägermatte (10) an einem Rand einen Anschlußbereich (16) aufweist, in dem beide Enden beider Heizungsrohre (12, 14) aus der Trägermatte (10) herausgeführt sind.

6. Fußbodenheizung nach Anspruch 5, **dadurch gekennzeichnet, daß** die aus dem Anschlußbereich austretenden Enden der Heizungsrohre (12, 14) in einen Unterputzkasten (20) eintreten, in dem sich ein Vorlauf (22) einer Heizungsanlage auf die Vorlauf-Enden der Heizungsrohre (12, 14) verzweigt und in dem die Rücklauf-Enden der Heizungsrohre (12, 14) an ein gemeinsames Kombiventil (32) angeschlossen sind, das die Funktion eines Rücklaufstemperaturbegrenzers und eines Raumthermostatventils erfüllt.

7. Fußbodenheizung nach Anspruch 6, **dadurch gekennzeichnet, daß** die Heizungsrohre (12, 14) über Steckkupplungen (24, 26, 28, 30) mit dem Vorlauf (22) und dem Kombiventil (32) verbunden sind.
